# EUROPEAN PATENT SPECIFICATION

(11) **EP 1 744 026 B1**
(45) Date of publication and mention of the grant of the patent: **28.05.2008**
(21) Application number: 06116272.3
(22) Date of filing: 29.06.2006
(51) Int. Cl.: F01P 11/10

(54) **Agricultural working vehicle with air scoop for air intake system**
Landwirtschaftliches Fahrzeug mit einem Luftschaufel für den Lufteinlass
Véhicule agricole ayant une pelle d'air pour la conduite de prise d'air

(30) Priority: 15.07.2005 US 182199; 11.07.2005 US 178681
(43) Date of publication of application: 17.01.2007
(73) Proprietor: Deere & Company, Moline, IL 61265-8098 (US)
(72) Inventor: Maas, Brian, Bettendorf, IL 52722 (US); Sheidler, Alan, Moline, IL 61265 (US); Shannon, Robert, Bettendorf, IA 52722 (US); Park, Yong, Mount Prospect, IL 60056 (US); Chaney, Mark, Geneseo, IL 61254 (US); Keys II, Gary, Bettendorf, IA 52722 (US)
(74) Representative: Holst, Sönke

(56) References cited:
- EP-A- 1 028 258
- GB-A- 1 203 837
- GB-A- 1 412 216
- GB-A- 1 425 464
- GB-A- 1 433 596
- US-A1- 2001 023 574
- US-B1- 6 193 772
- US-B1- 6 202 777

## Description

The present invention relates to a working vehicle in the form of an agricultural combine, comprising a vehicle body and an internal combustion engine assembly mounted to the body, the internal combustion engine assembly comprising:
an internal combustion engine including a heat exchanger;
an engine housing at least partially enclosing said internal combustion engine;
and an air scoop having an inlet and an outlet, said outlet positioned in fluid communication with said engine housing and facing toward said heat exchanger.

EP 1 028 258 A describes a work vehicle in the form of an excavator with an engine compartment containing an internal combustion engine and a heat exchanger. A vertically extending air scoop has a rectangular inlet and an outlet. The outlet is positioned in fluid communication with the engine housing and facing toward the heat exchanger.

A working vehicle according to the pre-amble of claim 1 is for example described in EP 0 489 975 A.

Work vehicles such as off road construction and agricultural vehicles are usually powered by combustion engines and operate in dirty environments. Often, an engine compartment is used to isolate the engine and cooling system from the dirty ambient air, which contains dust and other particulate matter. A work vehicle such as an agricultural harvester (e.g., combine) is also exposed to chaff (crop residue) from the crop being harvested. The crop harvesting process creates dust, dirt, and chaff that surrounds the vehicle. Hot engine exhaust is also discharged from the vehicle.

During operation, clean air is needed for efficient combustion in the internal combustion (IC) engine and cool air is needed for the engine and vehicle cooling systems. More particularly, the air supply must be free of debris and dust so as to mix with the fuel to provide combustion in the IC engine. The combustion air intake usually includes an air pre-filter and a separate air cleaner. Further, the air supply must be free of debris and dust for use as cooling air to cool the combustion engine, hydraulic system and cab air conditioning system of the work vehicle.

The air management system on some current combines involves drawing air through a louvered side panel into the cooling package. A rotating rotary screen with a vacuum cleaning system is used to pre-clean the dirty air before it passes through the heat exchangers of the cooling package. A combustion air inlet is located downstream of the rotary filter and has a separate pre-cleaner and air filter for the combustion air supplied to the engine.

However, prolonged use during harvesting operations can result in plugging of the rotary screen, plugging of the cooling package cores, plugging of the pre-cleaner, short air filter life, and excess debris accumulation on the engine deck. These affects of dirty air often require the operator to stop the vehicle and clean the air management system. Structural changes to the vehicle have reduced debris accumulation on the engine deck. However, the root cause of the dust and chaff in the intake air remains a problem.

This object is achieved by the subject matter of claim 1. The dependent claims recite advantageous embodiments of the invention.

The invention pertains to a working vehicle in the form of an agricultural combine, including a vehicle body and an internal combustion engine carried by the vehicle body. The internal combustion engine includes a heat exchanger. An air scoop has an inlet positioned near a top of the vehicle body and facing in an upward direction, and an outlet positioned in association with the heat exchanger. The air scoop has an inlet positioned above the vehicle body to draw cleaner air through the rotary screen and heat exchanger. The inlet of the air scoop is generally semi-circular.

An air exhaust chimney preferably has an inlet in fluid communication with the engine housing, and an outlet positioned above the engine housing and facing in an upward direction.

In the following, an embodiment of the invention will be discussed based upon the drawings, in which:
Fig. 1 is a perspective view of an agricultural combine including an embodiment of an internal combustion engine assembly of the present invention;
Fig. 2 is a side, schematic view of the internal combustion engine assembly used in the combine of Fig. 1; and
Fig. 3 is a perspective view of the internal combustion engine assembly of Fig. 2.

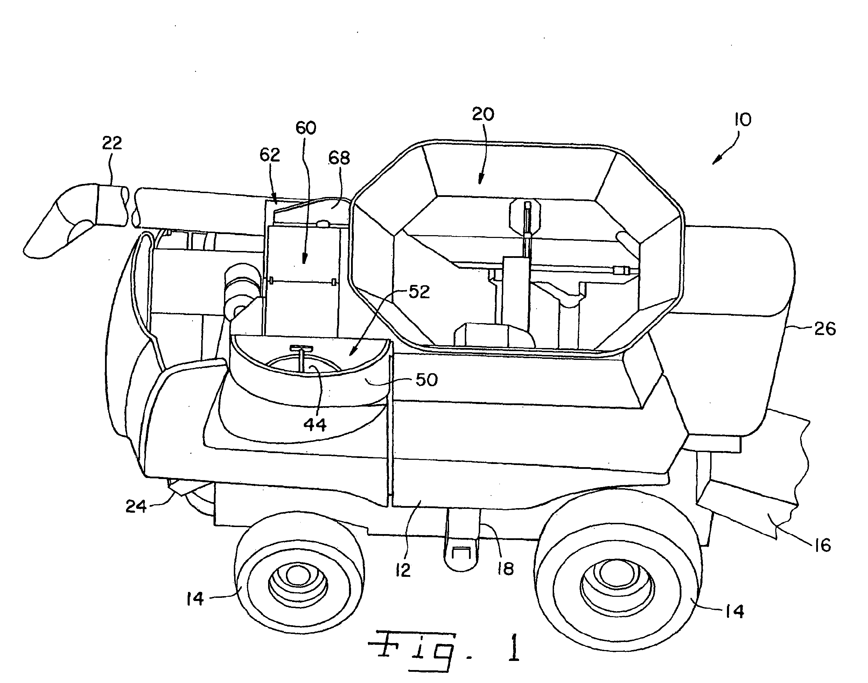

Referring now to the drawings, and more particularly to Fig. 1, there is shown a working vehicle in the form of an agricultural harvesting machine, such as an agricultural combine 10. The working vehicle can also be in the form of a different type of vehicle used in a dirty or chaff laden operating environment, such as an agricultural tractor, self propelled forage equipment, etc.

Combine 10 includes a supporting structure or body 12 having ground engaging wheels 14 extending from body 12. Although combine 10 is illustrated as having wheels 14, it could also have ground engaging tracks, either full tracks or half tracks. A harvesting platform (not shown), such as a soybean head or corn head, is used for harvesting a crop and directing it to a feederhouse 16. The harvested crop is directed by feederhouse 16 to internal workings of combine 10 not specifically shown in Fig. 1, such as an axial crop processing unit which threshes and separates the harvested crop material. Grain and chaff fall through grates below the crop processing unit to a cleaning system which removes the chaff and directs the clean grain via a clean grain elevator 18 to grain hopper 20. The clean grain in hopper 20 is typically unloaded into a gravity wagon or truck using unloading auger 22. The threshed and separated crop material other than the grain is transported via a discharge beater to a straw chopper 24, which chops and flails the non-grain material back to the field. The operation of combine 10 is controlled from an operator's cab 26.

Mechanical power for combine 10 is provided by an IC engine 28 carried by body 12. IC engine 28 is substantially enclosed within an engine compartment, the purpose of which will be described in further detail hereinafter. In one embodiment, the engine compartment is in the form of an engine housing 60 which substantially surrounds and is manufactured with IC engine 28. In other words, during manufacture of IC engine 28, IC engine 28 may be mounted to a standalone frame to which housing panels are attached, and the frame in turn mounted to combine 10.

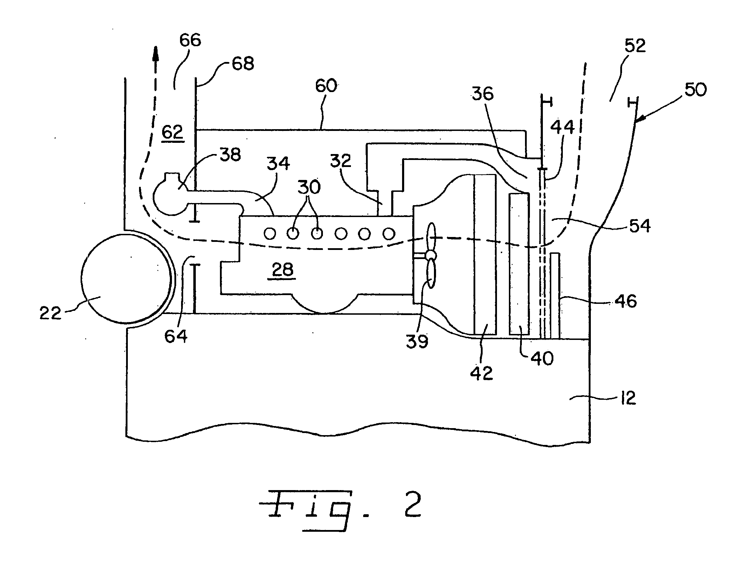

IC engine 28, in known manner, includes a plurality of combustion cylinders 30 (Fig. 2) which are in fluid communication with an intake manifold 32 and an exhaust manifold 34. Intake manifold 32 receives combustion air via a combustion air duct 36, and provides combustion air to combustion cylinders 30. In the embodiment shown, a turbocharger system (not specifically shown) is utilized for providing compressed charge air to combustion cylinders 30. Exhaust gas is discharged from combustion cylinders 30 to muffler 38 via exhaust manifold 34. The exhaust gas from muffler 38 is discharged to the ambient environment.

IC engine 28 also includes a fan 39 which draws ambient air through one or more heat exchangers and directs the air through engine housing 60 to remove heat from IC engine 28 primarily via air convection heat transfer. In the embodiment shown, IC engine 28 includes two heat exchangers in the form of a radiator 40 and charge air cooler 42. Radiator 40 cools the liquid coolant circulated within IC engine 28, and charge air cooler 42 cools the compressed and heated air which is discharged from the turbocharger.

At the upstream side of radiator 40 and charge air cooler 42 is a rotary screen 44 which rotates during use and is used for removing coarse particulate matter such as chaff, straw, etc. prior to flowing past radiator 40. A vacuum 46 vacuums the particulate matter from the outer surface of rotary screen 44 during each revolution of rotary screen 44.

According to one aspect of the present invention, an air scoop 50 is positioned adjacent the upstream side of rotary screen 44 and vacuum 46. Air scoop 50 has an inlet 52 and an outlet 54. Air scoop inlet 52 is positioned above the housing of IC engine 28, and is positioned near or above the top of combine body 12. Typically, chaff and dust laden air which is used within combine 10 hovers several feet above the ground level. By positioning air scoop inlet 52 above the height of combine body 12 and facing air scoop inlet 52 in an upward direction, the air which is used in IC engine 28 is substantially cleaner. This in turn reduces the amount of foreign matter which must be screened and filtered from the incoming air.

Air scoop 50 has a generally L-shaped flow path defined by outer wall 56 extending from inlet 52 to outlet 54. The L-shaped flow path directs the incoming air from a generally vertically downward direction to a generally horizontal direction entering rotary screen 44. Air scoop outlet 54 is positioned in association with rotary screen 44 such that a sufficient flow of air flows through radiator 40, charge air cooler 42 and past IC engine 28. In the embodiment shown, air scoop outlet 54 has a generally U-shaped cross-section, with the curved part of the cross-section approximating the circular shape of rotary screen 44. The curved transition in outer wall 56 of air scoop 50 between inlet 52 and outlet 54 redirects the air in the horizontal direction to rotary screen 44 without substantial restriction.

The outer wall 56 of air scoop 50 extending between air scoop inlet 52 and air scoop outlet 54 covers rotary screen 44 in a horizontal direction. With a conventional combine using a louvered panel on the outside of rotary screen 44, a strong cross-wind blowing into rotary screen 44 can affect the performance of vacuum 46, which in turn means that the removal of foreign matter from rotary screen 44 is less than optimal. On the other hand, since outer wall 56 of air scoop 50 covers rotary screen 44 in a horizontal direction, a strong cross-wind is deflected by outer wall 56 and does not deleteriously affect the performance of rotary screen 44 or vacuum 46.

According to another aspect of the present invention, IC engine 28 is substantially enclosed within engine housing 60, and air is drawn through air scoop 50 at one end of engine housing 60, and discharged at an opposite end of engine housing 60 through an air exhaust chimney 62. Air exhaust chimney 62 has an inlet 64 which is in fluid communication with and receives the flow of air which flows past IC engine 28. Air exhaust chimney 62 has an outlet 66 which is positioned above engine housing 60 and also near or above combine body 12. Air exhaust chimney outlet 66 opens in an upward direction to exhaust the heated air from engine housing 60 to the ambient environment above the upper level of combine body 12. By positioning outlet 66 in an upward facing direction above the upper level of combine body 12, the exhaust gas which is discharged on one side of combine 10 is inhibited from reintroduction as intake air on the opposite side of combine 10 through air scoop 50.

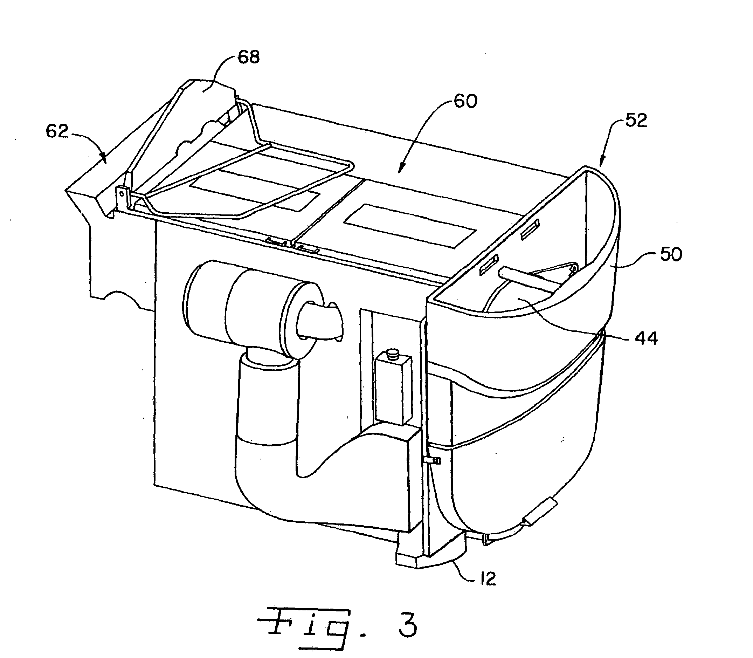

In the embodiment shown, muffler 38 is positioned within air exhaust chimney 62 such that the hot exhaust gases discharged from muffler 38 flow in an upward direction to the ambient environment. The flow of hot exhaust gases in an upward direction creates a chimney or upward draft effect which increases the discharge flow velocity to the ambient environment, and further inhibits a cross-drafting of the exhaust gases and/or heated cooling air from one side of the combine to the other to ensure that clean, cool air is drawn through air scoop 50 (Fig. 3).

To further assist in discharging the exhaust gases and heated cooling air to the ambient environment without the risk of cross-drafting to air scoop 50, an upstanding wall 68 acting as an air diverter directs the discharged gases further away from the upper surface of combine body 12. In the embodiment shown, a single upstanding wall 68 is provided on the side of air exhaust chimney 62 which is closest to air scoop 50 (Fig. 3). Of course, it will be appreciated that the number, height and shape of the upstanding wall(s) used to prevent cross-drafting can be empirically determined, depending upon the application.

During operation, air is drawn through air scoop 50 and is diverted from a vertically downward direction to a horizontal direction entering rotary screen 44. The air is substantially cleaner since air scoop inlet 52 opens in an upward direction at or above combine body 12. However, any foreign matter which is deposited on rotary screen 44 is removed by vacuum 46. The air passing through rotary screen 44 then travels through the cooling cores of radiator 40 and charge air cooler 42, drawn under the influence of fan 39. The air is then moved in an axial direction through fan 39 and past IC engine 28 before entering air exhaust chimney inlet 64. The air is heated as it flows through radiator 40 and charge air cooler 42, and past IC engine 28, and therefore naturally rises through air exhaust chimney 62. The heated air mixes with the exhaust gases from muffler 38, which is even hotter and under pressure. The gases are then discharged from air exhaust chimney outlet 66 to the ambient environment. Any cross-drafting of discharged gases is inhibited, even in a strong cross-wind from air exhaust chimney 62 to air scoop 50, by discharging the gases in an upward direction above the combine body 12.

Although the invention is illustrated as being used on a rotary combine, the present invention can be used on other combine types including conventional straw walker combines and hybrid combines having transverse threshing cylinders and rotary separators.

## Claims

1. A working vehicle in the form of an agricultural combine (10), comprising a vehicle body (12) and an internal combustion engine assembly mounted to the body (12), the internal combustion engine assembly comprising:
an internal combustion engine (28) including a heat exchanger;
an engine housing at least partially enclosing said internal combustion engine (28);
and an air scoop (50) having an inlet (52) and an outlet (54), said outlet (54) positioned in fluid communication with said engine housing and facing toward said heat exchanger,
**characterized in that** the inlet (52) is positioned above said engine housing and facing in an upward direction, and that the inlet (52) is generally semi-circular.

2. The working vehicle of claim 1, wherein said air scoop (50) has a generally L shaped flow path from said air scoop inlet (52) to said air scoop outlet (54), directing air from a generally vertically downward direction to a generally horizontal direction.

3. The working vehicle of claim 1, wherein said heat exchanger includes at least one of a radiator (40) and a charge air cooler (42).

4. The working vehicle of claim 1, further comprising an air exhaust chimney (62) having an inlet (62) and an outlet (64), said air exhaust chimney inlet (64) in fluid communication with said engine housing, said air exhaust chimney outlet (64) positioned above said engine housing and facing in an upward direction.

5. The working vehicle of claim 4, wherein said air scoop outlet (54) is positioned at one end of said engine housing, and said air exhaust chimney inlet (62) is positioned at an opposite end of said engine housing.

6. The working vehicle of claim 4, wherein said internal combustion engine (28) includes an exhaust outlet positioned within said air exhaust chimney (62).

7. The working vehicle of claim 1, further including a rotary screen (44) positioned at said air scoop outlet (54), upstream from said heat exchanger.

8. The working vehicle of claim 7, wherein said air scoop outlet (54) has a cross section approximating said rotary screen (44).

9. The working vehicle of claim 7, wherein said rotary screen (44) includes a vacuum.

10. The working vehicle of claim 1, wherein said air scoop (50) has a generally L shaped flow path from said inlet (52) to said outlet (54), directing air from a generally vertically downward direction to a generally horizontal direction.

11. The working vehicle of claim 1, wherein said air scoop (50) has a generally U-shaped outlet (54).

12. The working vehicle of claim 1, wherein said air scoop (50) has an outer wall with a curved transition between said inlet (52) and said outlet (54).

13. The working vehicle of one of claims 4 to 12, wherein said internal combustion engine (28) mounted transversely within said vehicle body (12), said air scoop outlet (54) is positioned on one side of said vehicle body (12), and said exhaust chimney (62) is positioned on an opposite side of said vehicle body (12).

14. The working vehicle of claim 13, wherein said air exhaust chimney (62) has an outlet (66) positioned near said top of said vehicle body (12).

## Patentansprüche

1. Arbeitsfahrzeug in Form eines Mähdreschers (10) mit einer Fahrzeugkarosserie (12) und einer an der Karosserie (12) angebrachten Verbrennungsmotoranordnung, wobei die Verbrennungsmotoranordnung Folgendes umfasst:
einen Verbrennungsmotor (28), der einen Wärmetauscher enthält;
ein Motorgehäuse, das den Verbrennungsmotor (28) zumindest teilweise umschließt;
und eine Lufthutze (50) mit einem Einlass (52) und einem Auslass (54), wobei der Auslass (54) in Strömungsverbindung mit dem Motorgehäuse positioniert ist und zum Wärmetauscher weist;
**dadurch gekennzeichnet, dass** der Einlass (52) über dem Motorgehäuse angeordnet ist und in eine Aufwärtsrichtung weist und dass der Einlass (52) allgemein halbkreisförmig ist.

2. Arbeitsfahrzeug nach Anspruch 1, wobei die Lufthutze (50) einen allgemein L-förmigen Strömungsweg von dem Lufthutzeneinlass (52) zum Lufthutzenauslass (54) aufweist, der Luft aus einer allgemein vertikalen Abwärtsrichtung in eine allgemein horizontale Richtung lenkt.

3. Arbeitsfahrzeug nach Anspruch 1, wobei der Wärmetauscher einen Kühler (40) und/oder einen Ladeluftkühler (42) enthält.

4. Arbeitsfahrzeug nach Anspruch 1, das weiterhin einen Luftabzug (62) mit einem Einlass (62) und einem Auslass (64) umfasst, wobei der Luftabzugeinlass (64) mit dem Motorgehäuse in Strömungsverbindung steht, wobei der Luftabzugauslass (64) über dem Motorgehäuse positioniert ist und in eine Aufwärtsrichtung weist.

5. Arbeitsfahrzeug nach Anspruch 4, wobei der Lufthutzenauslass (54) an einem Ende des Motorgehäuses angeordnet ist und der Luftabzugeinlass (62) an einem gegenüberliegenden Ende des Motorgehäuses angeordnet ist.

6. Arbeitsfahrzeug nach Anspruch 4, wobei der Verbrennungsmotor (28) einen im Luftabzug (62) angeordneten Abgasauslass enthält.

7. Arbeitsfahrzeug nach Anspruch 1, das weiterhin ein Drehsieb (44) enthält, das an dem Lufthutzenauslass (54) stromaufwärts des Wärmetauschers positioniert ist.

8. Arbeitsfahrzeug nach Anspruch 7, wobei der Lufthutzenauslass (54) einen Querschnitt aufweist, der sich dem Drehsieb (44) annähert.

9. Arbeitsfahrzeug nach Anspruch 7, wobei das Drehsieb (44) ein Vakuum enthält.

10. Arbeitsfahrzeug nach Anspruch 1, wobei die Lufthutze (50) einen allgemein L-förmigen Strömungsweg vom Einlass (52) zum Auslass (54) aufweist, der Luft aus einer allgemein vertikalen Abwärtsrichtung in eine allgemein horizontale Richtung lenkt.

11. Arbeitsfahrzeug nach Anspruch 1, wobei die Lufthutze (50) einen allgemein U-förmigen Auslass (54) aufweist.

12. Arbeitsfahrzeug nach Anspruch 1, wobei die Lufthutze (50) eine Außenwand mit einem gekrümmten Übergang zwischen dem Einlass (52) und dem Auslass (54) aufweist.

13. Arbeitsfahrzeug nach einem der Ansprüche 4 bis 12, wobei der Verbrennungsmotor (28) quer in der Fahrzeugkarosserie (12) angebracht ist, der Lufthutzenauslass (54) auf einer Seite der Fahrzeugkarosserie (12) positioniert ist und der Abzug (62) auf einer gegenüberliegenden Seite der Fahrzeugkarosserie (12) positioniert ist.

14. Arbeitsfahrzeug nach Anspruch 13, wobei der Luftabzug (62) einen Auslass (66) aufweist, der in der Nähe des oberen Endes der Fahrzeugkarosserie (12) positioniert ist.

## Revendications

1. Véhicule de travail sous la forme d'une moissonneuse-batteuse (10), comprenant un corps de véhicule (12) et un ensemble moteur à combustion interne monté sur le corps (12), l'ensemble moteur à combustion interne comprenant :
un moteur à combustion interne (28) comprenant un échangeur thermique ;
un carter de moteur enfermant au moins partiellement ledit moteur à combustion interne (28) ;
et une prise d'air (50) ayant une entrée (52) et une sortie (54), ladite sortie (54) étant positionnée en communication fluidique avec ledit carter de moteur et faisant face audit échangeur thermique,
**caractérisé en ce que** l'entrée (52) est positionnée au-dessus dudit carter de moteur et orientée vers le haut, et **en ce que** l'entrée (52) est généralement semi-circulaire.

2. Véhicule de travail selon la revendication 1, dans lequel ladite prise d'air (50) a une trajectoire d'écoulement généralement en forme de L de ladite entrée de prise d'air (52) à ladite sortie de prise d'air (54), dirigeant l'air d'une direction vers le bas généralement verticale vers une direction généralement horizontale.

3. Véhicule de travail selon la revendication 1, dans lequel ledit échangeur thermique comprend au moins un d'un radiateur (40) et d'un refroidisseur d'air de suralimentation (42).

4. Véhicule de travail selon la revendication 1, comprenant en outre une cheminée d'échappement d'air (62) ayant une entrée (62) et une sortie (64), ladite entrée de cheminée d'échappement d'air (64) étant en communication fluidique avec ledit carter de moteur, ladite sortie de cheminée d'échappement d'air (64) étant positionnée au-dessus dudit carter de moteur et orientée vers le haut.

5. Véhicule de travail selon la revendication 4, dans lequel ladite sortie de prise d'air (54) est positionnée à une extrémité dudit carter de moteur, et ladite entrée de cheminée d'échappement d'air (62) est positionnée à une extrémité opposée dudit carter de moteur.

6. Véhicule de travail selon la revendication 4, dans lequel ledit moteur à combustion interne (28) comprend une sortie d'échappement positionnée à l'intérieur de ladite cheminée d'échappement d'air (62).

7. Véhicule de travail selon la revendication 1, comprenant en outre un écran rotatif (44) positionné au niveau de ladite sortie de prise d'air (54), en amont dudit échangeur thermique.

8. Véhicule de travail selon la revendication 7, dans lequel ladite sortie de prise d'air (54) a une section transversale approchant ledit écran rotatif (44).

9. Véhicule de travail selon la revendication 7, dans lequel ledit écran rotatif (44) comprend un vide.

10. Véhicule de travail selon la revendication 1, dans lequel ladite prise d'air (50) a une trajectoire d'écoulement généralement en forme de L de ladite entrée (52) vers ladite sortie (54), dirigeant l'air d'une direction vers le bas généralement verticale vers une direction généralement horizontale.

11. Véhicule de travail selon la revendication 1, dans lequel ladite prise d'air (50) a une sortie généralement en forme de U (54).

12. Véhicule de travail selon la revendication 1, dans lequel ladite prise d'air (50) a une paroi externe avec une transition incurvée entre ladite entrée (52) et ladite sortie (54).

13. Véhicule de travail selon l'une quelconque des revendications 4 à 12, dans lequel ledit moteur à combustion interne (28) est monté transversalement à l'intérieur dudit corps de véhicule (12), ladite sortie de prise d'air (54) est positionnée sur un côté dudit corps de véhicule (12), et ladite cheminée d'échappement (62) est positionnée sur un côté opposé dudit corps de véhicule (12).

14. Véhicule de travail selon la revendication 13, dans lequel ladite cheminée d'échappement d'air (62) a une sortie (66) positionnée près de ladite partie supérieure dudit corps de véhicule (12).
